# EUROPEAN PATENT APPLICATION

(11) **EP 4 472 257 A1**
(43) Date of publication of application: **04.12.2024**
(21) Application number: 24175266.6
(22) Date of filing: 10.05.2024
(51) Int. Cl.: H04W 8/20

(54) **OVER-THE-AIR SIM AND DEVICE CONFIGURATION VIA ENTITLEMENT SERVER**

(30) Priority: 30.05.2023 US 202318325921
(71) Applicant: T-Mobile Innovations LLC, Overland Park, KS 66251 (US)
(72) Inventor: HOMORODI, Zoltan, North Bend, 98045 (US); LIANG, Ying Sheng, Auburn, 98001 (US); RANJAN, Nilesh, Sammamish, 98076 (US); SYED, Hamza Hydri, Bothell, 98012 (US)
(74) Representative: Suddaby, Mark Edward

(57) **Abstract**

A method is provided of updating Subscriber Identity Module (SIM) data in a user equipment (UE) associated with a wireless communication service provider. An entitlement server receives a UE SIM update inquiry from a UE, the inquiry including UE identifying information and UE stored SIM configuration identifying information. The entitlement server sends a SIM update inquiry to a SIM configuration repository, the inquiry including the UE identifying information and the UE stored SIM configuration identifying information. The entitlement server receives a SIM status message from the SIM configuration repository, the message indicating whether SIM configuration data stored in the SIM configuration repository is more recent than the UE stored SIM configuration. The entitlement server sends a SIM update response to the UE, the UE SIM update response including the SIM status message.

## Description

### BACKGROUND

Mobile communication devices are used for communication, connection, organization, information, and entertainment. A Subscriber Identity Module (SIM) card is an integrated circuit that is intended to securely store the International Mobile Subscriber Identity (IMSI) number and its related key, as well as other information. The IMSI and its key are used to identify and authenticate a subscriber device for attachment to a radio access network (RAN) of a mobile service provider, for example to receive a wireless link from a cell site. In some devices, a SIM card is an embedded semiconductor molded into a plastic card made of PVC. The embedded semiconductor circuit is part of a universal integrated circuit card (UICC) physical smart card that contains a unique serial number, Integrated Circuit Card Identifier (ICCID), IMSI, and other security information associated with the mobile service provider. In some devices, the SIM card is removable from the subscriber device. In other devices, the SIM is an embedded-SIM (eSIM) or embedded universal integrated circuit card (eUICC) that is embedded directly into a subscriber device. Information in such eSIMs and eUICCs may be updated without removing the eSIM or eUICC from the device using secure communications and a secure re-programming process. SIM cards and eSIMs may also be referred to as SIM devices.

### SUMMARY

In an embodiment, a method of updating Subscriber Identity Module (SIM) data in a user equipment (UE) associated with a wireless communication service provider is disclosed. The method comprises receiving, by a SIM configuration repository executing on a network server of the wireless communication service provider, a SIM update inquiry from an entitlement server of the wireless communication service provider, the SIM update inquiry comprising UE identifying information that identifies the UE and information identifying UE SIM configuration data stored in the UE; determining, by the SIM configuration repository, whether some or all of repository SIM configuration data stored in the SIM configuration repository and associated with the UE identifying information is more recent than the UE SIM configuration data; and sending, by the SIM configuration repository, a SIM status message to the entitlement server comprising information based on the determination of whether the repository SIM configuration data is more recent than the UE SIM configuration data.

In another embodiment, a method of updating Subscriber Identity Module (SIM) data in a user equipment (UE) associated with a wireless communication service provider is disclosed. The method comprises receiving, by an entitlement server executing on a network server of the wireless communication service provider, a UE SIM update inquiry from a UE associated with the wireless communication service provider, the UE SIM update inquiry comprising UE identifying information identifying the UE and information identifying UE SIM configuration data stored in the UE; sending, by the entitlement server, a SIM update inquiry to a SIM configuration repository of the wireless communication service provider, the SIM update inquiry comprising the UE identifying information and the information identifying the UE SIM configuration data; receiving, by the entitlement server, a SIM status message from the SIM configuration repository, the SIM status message indicating whether repository SIM configuration data stored in the SIM configuration repository is more recent than the UE SIM configuration data; and sending, by the entitlement server, a UE SIM update response to the UE, the UE SIM update response comprising the SIM status message.

In yet another embodiment, a method of updating Subscriber Identity Module (SIM) data in a user equipment (UE) associated with a wireless communication service provider is provided. The method comprises sending, by the UE, a UE SIM update inquiry to an entitlement server of the wireless communication service provider, the UE SIM update inquiry comprising UE identifying information identifying the UE and information identifying UE SIM configuration data stored in the UE; and receiving, by the UE, a UE SIM update response from the entitlement server, the UE SIM update response comprising update information indicating whether SIM configuration data more recent than the UE SIM configuration data is available.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a communication system according to an embodiment of the disclosure.
FIG. 2A is a sequence diagram of a SIM update according to a first embodiment of the disclosure.
FIG. 2B is a sequence diagram of a SIM update according to a second embodiment of the disclosure.
FIG. 3 is a sequence diagram of a SIM update notification according to a third embodiment of the disclosure.
FIGS. 4A, 4B, and 4C are flow charts of methods according to embodiments of the disclosure.
FIG. 5 illustrates a computer system suitable for implementing one or more embodiments disclosed herein.
FIG. 6 is an illustration of a wireless communication device according to an embodiment of the disclosure.
FIG. 7 is a block diagram or a hardware architecture of a wireless communication device according to an embodiment of the disclosure.
FIG. 8A is a block diagram of a software architecture of a wireless communication device according to an embodiment of the disclosure.
FIG. 8B is a block diagram of another software architecture of a wireless communication device according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

In some systems, SIM and/or device features or configurations are one way over-the-air (OTA) updates wherein the service provider makes such changes and pushes them to user equipment (UE) using Short Message Service (SMS) messaging. When the service provider makes SIM configuration changes that affect a large number of subscribers' UEs, a high volume of SMS messages may be required to update all the affected UEs. Because SMS traffic is normally heavy, this large additional SMS traffic volume may result in long delays for delivering OTA updates and further slow delivery of user SMS messages.

In systems according to the disclosure, a new flexible SIM configuration process is used that avoids congesting the SMS messaging channel while at the same time supporting near real-time SIM updates-for example, by triggering UEs to update their SIM more immediately upon an updated SIM becoming available. Some such processes according to the disclosure are based on the UE querying an Entitlement Server. The Entitlement Server can fetch the SIM delta and send the delta to the device. The communication between the UE and the Entitlement Server is via Internet protocol (IP) Hypertext Transfer Protocol (HTTP) in some cases, rather than via SMS. However, there is also a backup channel for SIM delta delivery through a short message service center (SMSC). The Entitlement Server may also push a notification to the UE to come fetch a SIM delta. The UE may communicate with the Entitlement Server to obtain access to system resources or other reasons unrelated to SIM updates, but these contacts may prompt the Entitlement Server to push a notification to the UE to come fetch a SIM delta. The Entitlement Server is located in the network core and its function is being extended in systems according to the disclosure.

When providing SIM deltas, the Entitlement Server can inform the UE of a future time to check back for possible future SIM deltas. This feature of the disclosure allows the Entitlement Server to manage the SIM updating load for a large number of UEs under its purview. Using this feature, the Entitlement Server can stagger device call-backs in time and/or by geographical region, whereby to reduce communication traffic jams.

Examples of some SIM configuration data that may change are access point names (APNs), frequency bands, Carrier Identification Code (CIC), IMSI number, home cell site, roaming lists, UE priority of cell site selection, and information relating to whether the UE is able to make WiFi calls. Mobile Virtual Network Operators (MVNOs) may change their data in SIM configurations more frequently, as they may be adapting their service plans and service contracts more frequently. MVNOs may have occasion to more frequently migrate subscribers between MVNOs, and systems according to the disclosure better support such migrations. Changing the manner of authorization that the web does can be easily updated by the Entitlement Server, which may be leveraged when migrating a large number of UEs between MVNOs or when MVNO policies are changing.

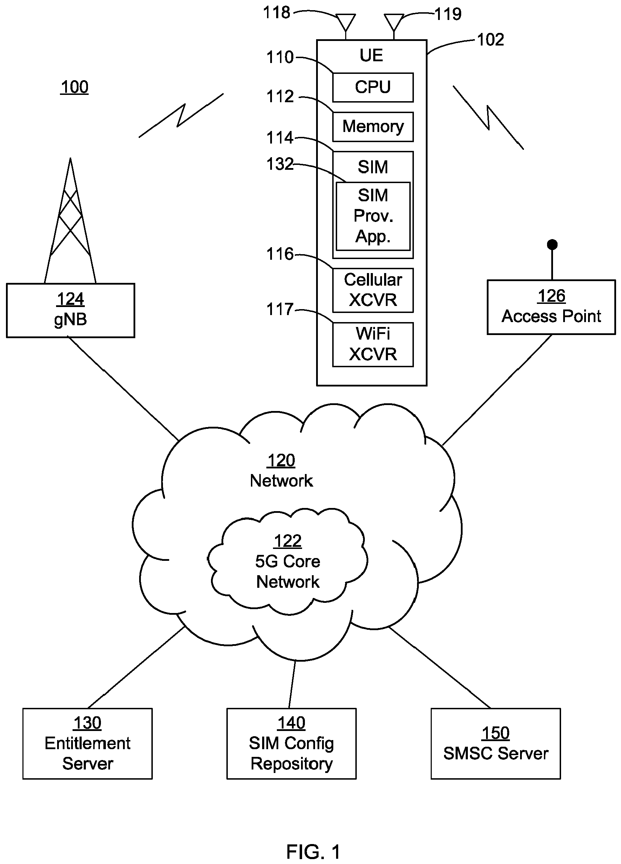

Turning now to FIG. 1, a communication system 100 according to the disclosure is described. In an embodiment, the system 100 comprises User Equipment (UE) 102, an entitlement server 130, a SIM configuration repository 140, and an SMSC server 150, which communicate by wired or wireless communication links via a network 120. The UE 102 may be a handheld device, such as a smart phone or tablet, or a laptop computer, communicating wirelessly with the network 120. The network 120 may be one or more public networks, one or more private networks, or a combination thereof. The network 120 may comprise or be coupled to a 5G core network 122 or, in other embodiments, a 4G or 4G Long Term Evolution (LTE) network.

The UE 102 comprises a processor 110, a memory 112, a subscriber identification (or identity) device (SIM) 114, a cellular radio transceiver 116, a radio antenna 118, a WiFi transceiver 117, and a WiFi antenna 119. In other embodiments, the SIM 114 may be an embedded SIM (eSIM). The SIM 114 includes a SIM provisioning application 132. A portion of the memory 112 may be a non-transitory memory and a portion of the memory 112 may be a transitory memory.

When properly activated and provisioned, the UE 102 may be able to establish a wireless communication link to a radio access network (RAN), for example to a Next Generation enhanced Node B (gNB) 124. The gNB 124 may also be referred to as a cell site or cell tower in some contexts. The gNB 124 may provide the UE 102 a communication link to the network 120. The UE 102 may communicate via the gNB 124 and via the network 120 to the entitlement server 130.

The UE 102 may be able to establish a WiFi communication link (or WiFi connection) to the network 120, for example via a WiFi access point 126. The access point 126 may provide the UE 102 a WiFi connection to the network 120. The UE 102 may communicate via the access point 126 and via the network 120 to the entitlement server 130.

The network 120 may include elements from more than one wired or wireless service provider. For example, the UE 102 may be coupled to the network 120 via a first service provider, while the access point 126 may be coupled via a second service provider. Any of the elements of system 100 may be coupled to other elements via the 5G core network 122. Where the network 120 comprises elements from multiple service providers, the network 120 may include a plurality of 5G core networks 122, each supported by a different service provider and coupled to each other directly or via wired or wireless connections through non-5G elements of the network 120.

The entitlement server 130 provides to the UE 102 entitlement verification for the activation of services such as SMS over IP, Voice-over-Wi-Fi, Voice-over-LTE, On-Device Service Activation of eSIM companion devices, and data plan information. The entitlement server 130 further sends to the UE 102 SIM configuration data, and/or SIM configuration update data (collectively "SIM update data"), and/or information relating to SIM update data. The entitlement server 130 may send such SIM update data and/or information over-the-air via the gNB 124 or via the WiFi access point 126.

The SIM configuration repository 140 stores SIM configuration data and/or SIM configuration update data that is associated with UE identifying information. The UE identifying information identifies one or more UEs that are intended to receive the SIM update data. The UE identifying information includes, for example, information identifying one or more of an individual UE, a UE manufacturer, a UE model, a service provider or MVNO associated with the UE, and a provider plan associated with the UE.

The SIM configuration repository 140 may send the SIM update data to the entitlement server 130 in response to an update inquiry from the entitlement server 130. The SIM configuration repository 140 may send an update status message to the entitlement server 130 in response to receiving SIM update data and UE identifying information, the update status message indicating that SIM update data is available for UEs identified by the update UE identifying information.

The SMSC server 150 provides SMS communication between at least the entitlement server 130 and the UE 102. The SMSC server 150 may receive a SIM transfer message from the SIM configuration repository 140 and, in response, send the SIM update data to the UE 102 via an SMS message. The SIM configuration repository 140 may send the SIM transfer message to the SMSC server 150 in order to use SMS communication as a backup path to the OTA communication of SIM update data to the UE 102.

The UE 102 may 'pull' the SIM update data by sending a SIM update inquiry to the entitlement server 130. The SIM configuration repository 140 may 'push' SIM update data by sending an update status message to the entitlement server 130, causing the entitlement server 130 to prompt the UE 102 to pull the SIM update data from the entitlement server 130.

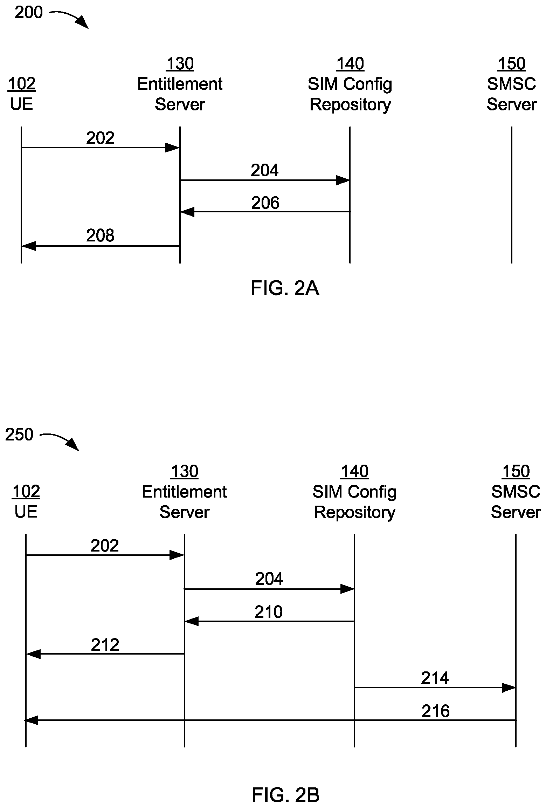

FIG. 2A is a sequence diagram 200 of a SIM update according to a first embodiment of the disclosure. In step 202, the UE 102 sends to the entitlement server 130 a UE SIM update inquiry. The UE SIM update inquiry includes UE identifying information that identifies the UE 102 and information that identifies SIM configuration data stored in the UE 102. In step 204, the entitlement server 130 sends to the SIM configuration repository 140 a SIM update inquiry. The SIM update inquiry includes the UE identifying information and the information that identifies the UE SIM configuration data stored in the UE 102.

In step 206, the entitlement server 130 receives from the SIM configuration repository 140 a SIM status message that includes update information indicating whether SIM configuration data stored in the SIM configuration repository 140 is more recent than the SIM configuration data stored in the UE 102. In step 208, the entitlement server 130 sends to the UE 102 a UE SIM update response, the UE SIM update response based on the update information received in the SIM status message.

The update information received in the SIM status message may indicate that there is not more recent SIM configuration data in the SIM configuration repository 140 than the SIM configuration data in the UE 102. However, if the SIM configuration data in the SIM configuration repository 140 is more recent than the SIM configuration data in the UE 102, the SIM status message further includes SIM update data, which includes SIM configuration data that is (i) stored in the SIM configuration repository 140, (ii) associated with the UE identifying information, and (iii) is more recent than the SIM configuration data stored in the UE 102. If the entitlement server 130 receives such SIM update data, the SIM update data is included in the UE SIM update response sent to the UE 102 in step 208.

FIG. 2B is a sequence diagram 250 of a SIM update according to a second embodiment of the disclosure. Steps 202 and 204 are as described with reference to FIG. 2A: the entitlement server 130 receives a UE SIM update inquiry from the UE and sends to the SIM configuration repository 140 a SIM update inquiry.

In step 210, the entitlement server 130 receives from the SIM configuration repository 140 a SIM status message further comprises backup delivery information indicating that the SIM update data is being sent to the UE 102 by the SIM configuration repository 140 via a short message service (SMS) center (SMSC) 150. If the entitlement server 130 receives backup delivery information from the SIM configuration repository 140 in step 210, then in step 212 the entitlement server 130 sends to the UE 102 a SIM update response comprising the backup delivery information and configured to indicate to the UE 102 that the SIM update data will be received via SMS.

The SIM configuration repository 140 may send the SIM update data via the SMSC 150 because of an issue with the entitlement server 130 (e.g., the entitlement server 130 is not available or attempts to respond by the entitlement server 130 to the UE 102 have failed) or because the SIM configuration repository 140 is configured to send all SIM configuration updates via SMS. In step 214, the SIM configuration repository 140 sends a SIM transfer message to the SMSC 150, the SIM transfer message configured to cause the SMSC 150, in step 216, to send the SIM update data to the UE 102 via an SMS message.

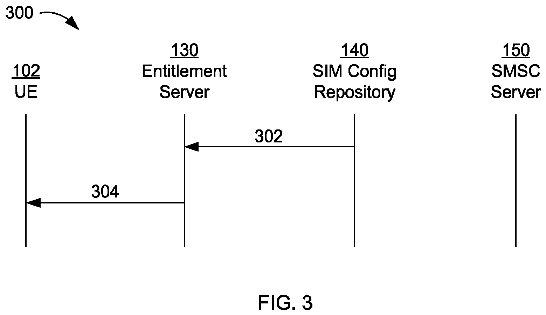

FIG. 3 is a sequence diagram 300 of a SIM update notification according to a third embodiment of the disclosure. When an on-demand SIM configuration update becomes available, the SIM configuration repository 140 can send a secure push notification to the UE 102 via the entitlement server 130, the push notification configured to cause the UE 102 to send to the entitlement server 130 a UE SIM update inquiry, as described with reference to step 202 of sequence diagrams 200 and 250.

In step 302, in response to receiving a SIM update message that includes SIM update data and UE identifying information identifying one or more UEs associated with the SIM update data, the SIM configuration repository 140 sends a SIM update status message to the entitlement server 130. The SIM update status message comprises the UE identifying information and SIM configuration data associated with the UEs identified by the update UE identifying information.

The SIM update status message is configured to cause the entitlement server 130, to store SIM configuration data and associate the SIM configuration data with the UE identifying information. In step 304, in response to receiving the SIM update status message, the entitlement server 130 sends a UE SIM update prompt to the UE 102 and other UEs identified in the UE identifying information, if any. The UE SIM update prompt includes prompt information that is configured to cause the UE 102 and any other UEs to send the UE SIM update inquiry to the entitlement server 130, as described above with reference to step 202 of the sequence diagram 200.

In some embodiments, the UE 102 may contact the entitlement server 130 for some purpose unrelated to SIM configuration updates (for example, to obtain entitlement verification for the activation of a service such as Voice-over-Wi-Fi or Voice-over-LTE, etc.). The entitlement server 130 may determine whether it has stored SIM configuration data that is associated with UE identifying information of the UE 102. If so, the entitlement server 130 additionally sends the UE SIM update prompt to the UE 102 to cause the UE 102 to send the UE SIM update inquiry to the entitlement server 130, thereby initiating the SIM update process described with reference to the sequence diagram 200.

In some embodiments, the prompt information sent to the UE 102 and any other UEs includes inquiry timing information, specifying a time for the UE 102 to send the UE SIM update inquiry. The inquiry timing information may specify an individual time for each UE identified in the UE identifying information or may specify an individual time for one or more groups of the UEs. Such UEs may be grouped by geographical region. The inquiry timing information may specify a time period (for example, 24 hours or one week) for each of one or more UEs to wait sending the UE SIM update inquiry. The inquiry timing information may instruct one or more UEs to send a UE SIM update inquiry no more often than once in a specified time period.

Distributing updated SIM configuration data to a large number of UEs has the potential technical problem of causing congestion in the network 120 and/or the 5G core network 122. Systems according to the disclosure for distribution of SIM configuration data provide a technical solution to such potential congestion problems by allowing the timing of such distributions to be spread out over time, thereby reducing the potential for congestion.

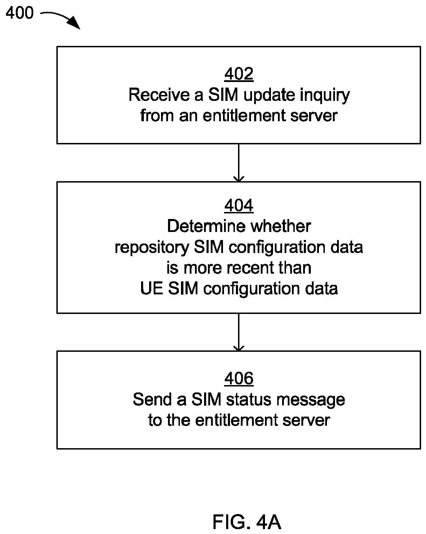

FIG. 4A is a flow chart of a method 400 according to an embodiment of the disclosure. In an embodiment, the method 400 updates SIM data in a UE associated with a wireless communication service provider and may be performed by the SIM configuration repository 140 executing on a network server of the wireless communication service provider.

In step 402, the SIM configuration repository 140 receives a SIM update inquiry from the entitlement server 130, where the SIM update inquiry includes UE identifying information identifying the UE 102, as well as information identifying UE SIM configuration data stored in the UE 102. In step 404, the SIM configuration repository 140 determines whether some or all of repository SIM configuration data that is stored in the SIM configuration repository and associated with the UE identifying information is more recent than the UE SIM configuration data. In step 406, the SIM configuration repository 140 sends a SIM status message to the entitlement server 130, where the information is based on the determination of whether the repository SIM configuration data is more recent than the UE SIM configuration data. In some embodiments, the UE identifying information includes information identifying one or more of an individual UE, a manufacturer of the UE, a model of the UE, a service provider or MVNO associated with the UE, and a provider plan associated with the UE.

The method 400 may further include the SIM configuration repository 140 generating SIM update data that includes repository SIM configuration data associated with the UE identifying information that is more recent than the UE SIM configuration data. In step 406, the SIM configuration repository 140 may send the SIM update data to the entitlement server 130 as part of the SIM status message.

The method 400 may further include the SIM configuration repository 140 sending a SIM transfer message to the SMSC 150, where the SIM transfer message configured to cause the SMSC 150 to send the SIM update data to the UE 102 via an SMS message. In step 406, the SIM configuration repository 140 may send information indicating that the SIM update data is being sent to the UE 102 via the SMSC 150 to the entitlement server 130 as part of the SIM status message.

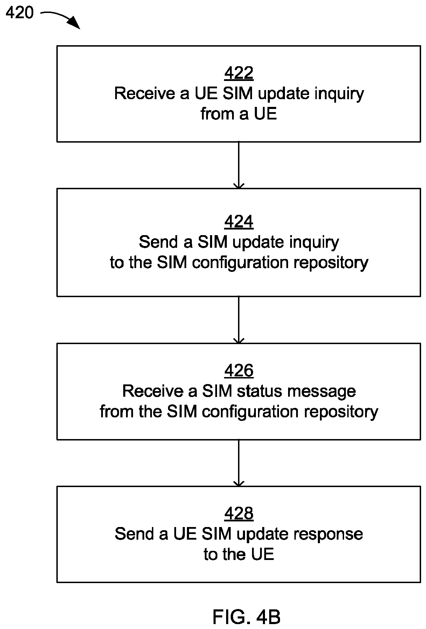

FIG. 4B is a flow chart of a method 420 according to an embodiment of the disclosure. In an embodiment, the method 420 updates SIM data in a UE associated with a wireless communication service provider, and may be performed by the entitlement server 130 executing on a network server of the wireless communication service provider.

In step 422, the entitlement server 130 receives a UE SIM update inquiry from the UE 102, the UE SIM update inquiry including UE identifying information identifying the UE 102, as well as information identifying UE SIM configuration data that is stored in the UE 102. In step 424, the entitlement server 130 sends a SIM update inquiry to the SIM configuration repository 140, where the SIM update inquiry includes the UE identifying information and the information identifying the UE SIM configuration data.

In step 426, the entitlement server 130 receives a SIM status message from the SIM configuration repository 140 that indicates whether repository SIM configuration data that is stored in the SIM configuration repository 140 is more recent than the UE SIM configuration data. In step 408, the entitlement server 130 sends a UE SIM update response to the UE 102, where the UE SIM update response includes the SIM status message.

In some embodiments, the SIM status message further includes SIM update data that includes repository SIM configuration data associated with the UE identifying information that is more recent than the UE SIM configuration data, and the UE SIM update response further includes the SIM update data. In some such embodiments, the SIM status message further includes backup delivery information that indicating whether the SIM update data is being sent to the UE 102 by the SIM configuration repository 140 via the SMSC 150.

In other embodiments, the entitlement server 130 receives a SIM update status message from the SIM configuration repository 140, where the SIM update status message includes (i) update UE identifying information identifying one or more update UEs and (ii) repository SIM configuration data associated with the update UEs. The entitlement server 130 also stores the repository SIM configuration data and associate the repository SIM configuration data with the update UE identifying information. The entitlement server 130 further sends a UE SIM update prompt to one or more of the update UEs, where the UE SIM update prompt includes prompt information that is configured to cause the update UEs to send a UE SIM update inquiry to the entitlement server 130. In some such embodiments, the prompt information includes inquiry timing information that specifies one or more times for the update UEs to send the UE SIM update inquiry. In other such embodiments, the entitlement server 130 determines, in response to receiving the UE SIM update inquiry, whether repository SIM configuration data associated with the UE identifying information is stored in the entitlement server 130 and, if so, sends the stored repository SIM configuration data to the UE 102.

In still other embodiments, the entitlement server 130 receives from the UE a message other than the UE SIM update inquiry, where the message comprising UE identifying information that identifies the UE, and entitlement server 130 determines whether repository SIM configuration data that is associated with the UE identifying information is stored in the entitlement server and, if so, sends a UE SIM update prompt to the UE, the UE SIM update prompt comprising prompt information configured to cause the UE to send the UE SIM update inquiry to the entitlement server. In some such embodiments, the prompt information includes inquiry timing information that specifies one or more times for the update UEs to send the UE SIM update inquiry.

In other embodiments, the UE identifying information includes information identifying one or more of (i) an individual UE, (ii) a manufacturer of the UE, (iii) a model of the UE, (iv) a service provider or MVNO associated with the UE, and (v) a provider plan associated with the UE.

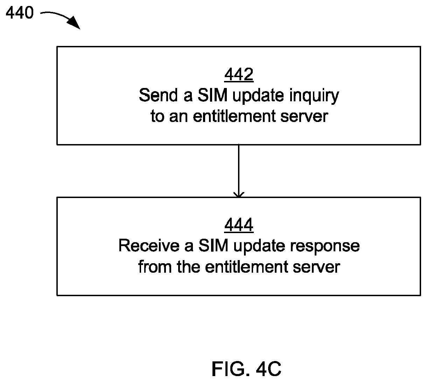

FIG. 4C is a flow chart of a method 440 according to an embodiment of the disclosure. In an embodiment, the method 440 updates SIM data in a UE associated with a wireless communication service provider, and may be performed by the UE 102.

In step 442, the UE 102 sends a UE SIM update inquiry to the entitlement server 130, the UE SIM update inquiry comprising UE identifying information identifying the UE 102, as well as information identifying UE SIM configuration data stored in the UE 102. In step 444, the UE 102 receives a UE SIM update response from the entitlement server 130, the UE SIM update response comprising update information indicating whether SIM configuration data more recent than the UE SIM configuration data is available.

In some embodiments, the UE SIM update response further includes SIM update data that comprises repository SIM configuration data that is associated with the UE identifying information and is more recent than the UE SIM configuration data. In other embodiments, the UE SIM update response further includes backup delivery information that indicating whether the SIM update data is being sent via the SMSC 150.

In still other embodiments, the UE 102 receives a UE SIM update prompt from the entitlement server, where the UE SIM update prompt includes prompt information and, in response, sends the UE SIM update inquiry to the entitlement server 130. In some such embodiments, the prompt information includes inquiry timing information and the UE 102 determines a time to send the UE SIM update inquiry to the entitlement server 130 based on the inquiry timing information.

In still other embodiments, the UE identifying information includes information identifying one or more of (i) the UE 102, (ii) a manufacturer of the UE 102, (iii) a model of the UE 102, (iv) a service provider or MVNO associated with the UE 102, and (v) a provider plan associated with the UE 102.

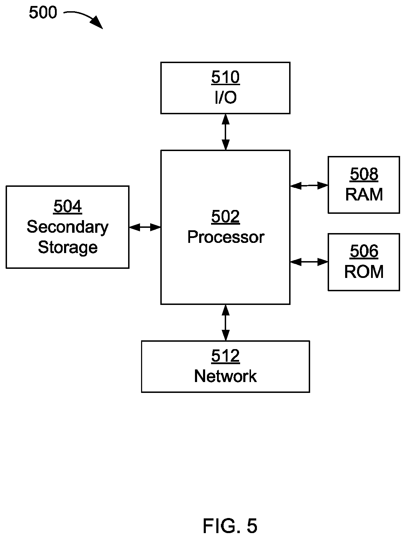

FIG. 5 illustrates a computer system 500 suitable for implementing one or more embodiments disclosed herein. The computer system 500 includes a processor 502 (which may be referred to as a central processor unit, CPU, or device processor) that is in communication with memory devices including secondary storage 504, read only memory (ROM) 506, random access memory (RAM) 508, input/output (I/O) devices 510, and network connectivity devices 512. The processor 502 may be implemented as one or more CPU chips.

It is understood that by programming and/or loading executable instructions onto the computer system 500, at least one of the CPU 502, the RAM 508, and the ROM 506 are changed, transforming the computer system 500 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 500 is turned on or booted, the CPU 502 may execute a computer program or application. For example, the CPU 502 may execute software or firmware stored in the ROM 506 or stored in the RAM 508. In some cases, on boot and/or when the application is initiated, the CPU 502 may copy the application or portions of the application from the secondary storage 504 to the RAM 508 or to memory space within the CPU 502 itself, and the CPU 502 may then execute instructions that the application is comprised of. In some cases, the CPU 502 may copy the application or portions of the application from memory accessed via the network connectivity devices 512 or via the I/O devices 510 to the RAM 508 or to memory space within the CPU 502, and the CPU 502 may then execute instructions that the application is comprised of. During execution, an application may load instructions into the CPU 502, for example load some of the instructions of the application into a cache of the CPU 502. In some contexts, an application that is executed may be said to configure the CPU 502 to do something, e.g., to configure the CPU 502 to perform the function or functions promoted by the subject application. When the CPU 502 is configured in this way by the application, the CPU 502 becomes a specific purpose computer or a specific purpose machine.

The secondary storage 504 is typically comprised of one or more disk drives or tape drives and is used for non-volatile storage of data and as an over-flow data storage device if RAM 508 is not large enough to hold all working data. Secondary storage 504 may be used to store programs which are loaded into RAM 508 when such programs are selected for execution. The ROM 506 is used to store instructions and perhaps data which are read during program execution. ROM 506 is a non-volatile memory device which typically has a small memory capacity relative to the larger memory capacity of secondary storage 504. The RAM 508 is used to store volatile data and perhaps to store instructions. Access to both ROM 506 and RAM 508 is typically faster than to secondary storage 504. The secondary storage 504, the RAM 508, and/or the ROM 506 may be referred to in some contexts as computer readable storage media and/or non-transitory computer readable media.

I/O devices 510 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 512 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 512 may provide wired communication links and/or wireless communication links (e.g., a first network connectivity device 512 may provide a wired communication link and a second network connectivity device 512 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC) and radio frequency identity (RFID). The radio transceiver cards may promote radio communications using 5G, 5G New Radio, or 5G LTE radio communication protocols. These network connectivity devices 512 may enable the processor 502 to communicate with the Internet or one or more intranets. With such a network connection, it is contemplated that the processor 502 might receive information from the network, or might output information to the network in the course of performing the above-described method steps. Such information, which is often represented as a sequence of instructions to be executed using processor 502, may be received from and outputted to the network, for example, in the form of a computer data signal embodied in a carrier wave.

Such information, which may include data or instructions to be executed using processor 502 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 502 executes instructions, codes, computer programs, scripts which it accesses from hard disk, floppy disk, optical disk (these various disk based systems may all be considered secondary storage 504), flash drive, ROM 506, RAM 508, or the network connectivity devices 512. While only one processor 502 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 504, for example, hard drives, floppy disks, optical disks, and/or other device, the ROM 506, and/or the RAM 508 may be referred to in some contexts as non-transitory instructions and/or non-transitory information.

In an embodiment, the computer system 500 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 500 to provide the functionality of a number of servers that is not directly bound to the number of computers in the computer system 500. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 500, at least portions of the contents of the computer program product to the secondary storage 504, to the ROM 506, to the RAM 508, and/or to other non-volatile memory and volatile memory of the computer system 500. The processor 502 may process the executable instructions and/or data structures in part by directly accessing the computer program product, for example by reading from a CD-ROM disk inserted into a disk drive peripheral of the computer system 500. Alternatively, the processor 502 may process the executable instructions and/or data structures by remotely accessing the computer program product, for example by downloading the executable instructions and/or data structures from a remote server through the network connectivity devices 512. The computer program product may comprise instructions that promote the loading and/or copying of data, data structures, files, and/or executable instructions to the secondary storage 504, to the ROM 506, to the RAM 508, and/or to other non-volatile memory and volatile memory of the computer system 500.

In some contexts, the secondary storage 504, the ROM 506, and the RAM 508 may be referred to as a non-transitory computer readable medium or a computer readable storage media. A dynamic RAM embodiment of the RAM 508, likewise, may be referred to as a non-transitory computer readable medium in that while the dynamic RAM receives electrical power and is operated in accordance with its design, for example during a period of time during which the computer system 500 is turned on and operational, the dynamic RAM stores information that is written to it. Similarly, the processor 502 may comprise an internal RAM, an internal ROM, a cache memory, and/or other internal non-transitory storage blocks, sections, or components that may be referred to in some contexts as non-transitory computer readable media or computer readable storage media.

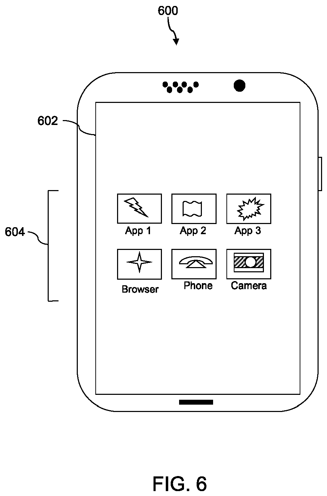

FIG. 6 depicts the UE 102, which is operable for implementing aspects of the present disclosure, but the present disclosure should not be limited to these implementations. Though illustrated as a mobile phone, the UE 102 may take various forms including a wireless handset, a pager, a personal digital assistant (PDA), a gaming device, or a media player. The UE 102 includes a touchscreen display 602 having a touch-sensitive surface for input by a user. A small number of application icons 604 are illustrated within the touch screen display 602. It is understood that in different embodiments, any number of application icons 604 may be presented in the touch screen display 602. In some embodiments of the UE 102, a user may be able to download and install additional applications on the UE 102, and an icon associated with such downloaded and installed applications may be added to the touch screen display 602 or to an alternative screen. The UE 102 may have other components such as electro-mechanical switches, speakers, camera lenses, microphones, input and/or output connectors, and other components as are well known in the art. The UE 102 may present options for the user to select, controls for the user to actuate, and/or cursors or other indicators for the user to direct. The UE 102 may further accept data entry from the user, including numbers to dial or various parameter values for configuring the operation of the handset. The UE 102 may further execute one or more software or firmware applications in response to user commands. These applications may configure the UE 102 to perform various customized functions in response to user interaction. Additionally, the UE 102 may be programmed and/or configured over-the-air, for example from a wireless base station, a wireless access point, or a peer UE 102. The UE 102 may execute a web browser application which enables the touch screen display 602 to show a web page. The web page may be obtained via wireless communications with a base transceiver station, a wireless network access node, a peer UE 102 or any other wireless communication network or system.

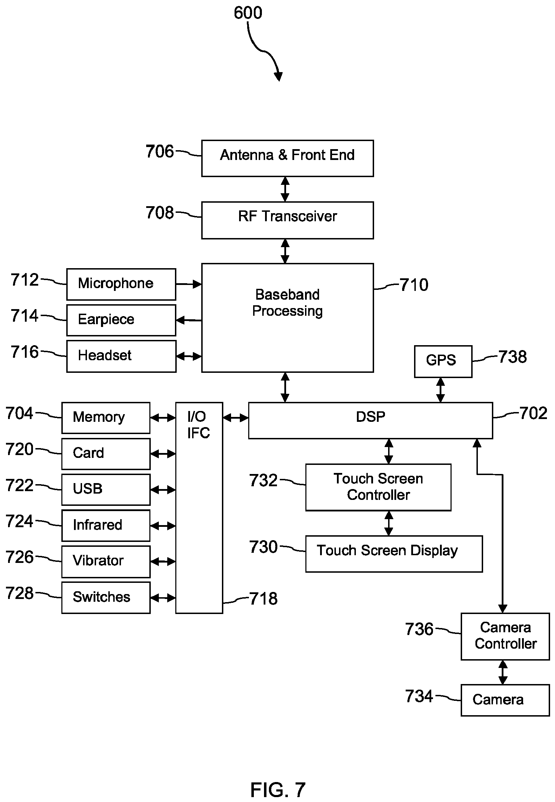

FIG. 7 shows a block diagram of the UE 102. While a variety of known components of handsets are depicted, in an embodiment a subset of the listed components and/or additional components not listed may be included in the UE 102. The UE 102 includes a digital signal processor (DSP) 702 and a memory 704. As shown, the UE 102 may further include one or more antenna and front end unit 706, a one or more radio frequency (RF) transceiver 708, a baseband processing unit 710, a microphone 712, an earpiece speaker 714, a headset port 716, an input/output interface 718, a removable memory card 720, a universal serial bus (USB) port 722, an infrared port 724, a vibrator 726, one or more electro-mechanical switches 728, a touch screen display 730, a touch screen controller 732, a camera 734, a camera controller 736, and a global positioning system (GPS) receiver 738. In an embodiment, the UE 102 may include another kind of display that does not provide a touch sensitive screen. In an embodiment, the UE 102 may include both the touch screen display 730 and additional display component that does not provide a touch sensitive screen. In an embodiment, the DSP 702 may communicate directly with the memory 704 without passing through the input/output interface 718. Additionally, in an embodiment, the UE 102 may comprise other peripheral devices that provide other functionality.

The DSP 702 or some other form of controller or central processing unit operates to control the various components of the UE 102 in accordance with embedded software or firmware stored in memory 704 or stored in memory contained within the DSP 702 itself. In addition to the embedded software or firmware, the DSP 702 may execute other applications stored in the memory 704 or made available via information carrier media such as portable data storage media like the removable memory card 720 or via wired or wireless network communications. The application software may comprise a compiled set of machine-readable instructions that configure the DSP 702 to provide the desired functionality, or the application software may be high-level software instructions to be processed by an interpreter or compiler to indirectly configure the DSP 702.

The DSP 702 may communicate with a wireless network via the analog baseband processing unit 710. In some embodiments, the communication may provide Internet connectivity, enabling a user to gain access to content on the Internet and to send and receive e-mail or text messages. The input/output interface 718 interconnects the DSP 702 and various memories and interfaces. The memory 704 and the removable memory card 720 may provide software and data to configure the operation of the DSP 702. Among the interfaces may be the USB port 722 and the infrared port 724. The USB port 722 may enable the UE 102 to function as a peripheral device to exchange information with a personal computer or other computer system. The infrared port 724 and other optional ports such as a Bluetooth^{®} interface or an IEEE 802.11 compliant wireless interface may enable the UE 102 to communicate wirelessly with other nearby handsets and/or wireless base stations.

In an embodiment, one or more of the radio transceivers is a cellular radio transceiver. A cellular radio transceiver promotes establishing a wireless communication link with a cell site according to one or more of a 5G, a long term evolution (LTE), a code division multiple access (CDMA), a global system for mobile communications (GSM) wireless communication protocol. In an embodiment, one of the radio transceivers 708 may comprise a near field communication (NFC) transceiver. The NFC transceiver may be used to complete payment transactions with point-of-sale terminals or other communications exchanges. In an embodiment, each of the different radio transceivers 708 may be coupled to its own separate antenna. In an embodiment, the UE 102 may comprise a radio frequency identify (RFID) reader and/or writer device.

The switches 728 may couple to the DSP 702 via the input/output interface 718 to provide one mechanism for the user to provide input to the UE 102. Alternatively, one or more of the switches 728 may be coupled to a motherboard of the UE 102 and/or to components of the UE 102 via a different path (e.g., not via the input/output interface 718), for example coupled to a power control circuit (power button) of the UE 102. The touch screen display 730 is another input mechanism, which further displays text and/or graphics to the user. The touch screen LCD controller 732 couples the DSP 702 to the touch screen display 730. The GPS receiver 738 is coupled to the DSP 702 to decode global positioning system signals, thereby enabling the UE 102 to determine its position.

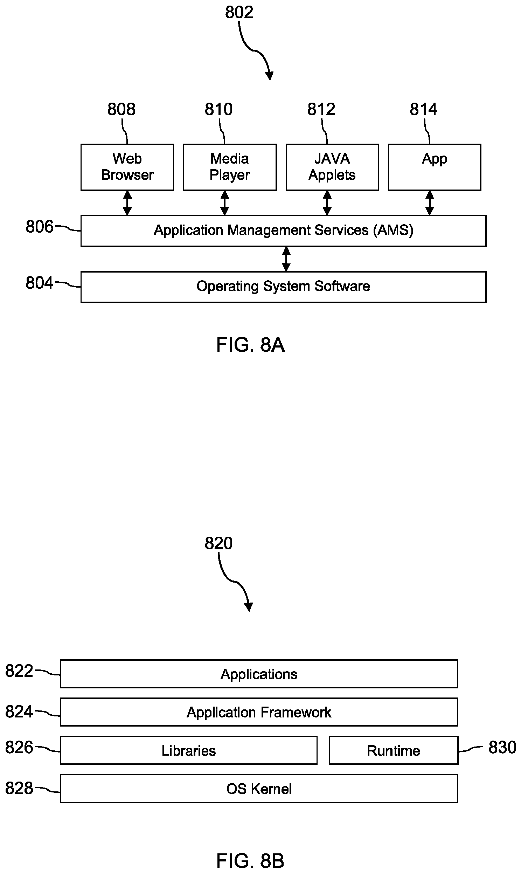

FIG. 8A illustrates a software environment 802 that may be implemented by the DSP 702. The DSP 702 executes operating system software 804 that provides a platform from which the rest of the software operates. The operating system software 804 may provide a variety of drivers for the handset hardware with standardized interfaces that are accessible to application software. The operating system software 804 may be coupled to and interact with application management services (AMS) 806 that transfer control between applications running on the UE 400. Also shown in FIG. 8A are a web browser application 808, a media player application 810, and JAVA applets 812. The web browser application 808 may be executed by the UE 400 to browse content and/or the Internet, for example when the UE 400 is coupled to a network via a wireless link. The web browser application 808 may permit a user to enter information into forms and select links to retrieve and view web pages. The media player application 810 may be executed by the UE 400 to play audio or audiovisual media. The JAVA applets 812 may be executed by the UE 400 to provide a variety of functionality including games, utilities, and other functionality.

FIG. 8B illustrates another software environment 820 that may be implemented by the DSP 702. The DSP 702 executes operating system kernel (OS kernel) 828 and an execution runtime 830. The DSP 702 executes applications 822 that may execute in the execution runtime 830 and may rely upon services provided by the application framework 824. Applications 822 and the application framework 824 may rely upon functionality provided via the libraries 826.

While several embodiments have been provided in the present disclosure, it should be understood that the disclosed systems and methods may be embodied in many other specific forms without departing from the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of updating Subscriber Identity Module, SIM, data in a user equipment, UE, associated with a wireless communication service provider, the method comprising:
receiving, by a SIM configuration repository executing on a network server of the wireless communication service provider, a SIM update inquiry from an entitlement server of the wireless communication service provider, the SIM update inquiry comprising UE identifying information that identifies the UE and information identifying UE SIM configuration data stored in the UE;
determining, by the SIM configuration repository, whether some or all of repository SIM configuration data stored in the SIM configuration repository and associated with the UE identifying information is more recent than the UE SIM configuration data; and
sending, by the SIM configuration repository, a SIM status message to the entitlement server comprising information based on the determination of whether the repository SIM configuration data is more recent than the UE SIM configuration data.

2. The method of claim 1, further comprising:
generating, by the SIM configuration repository, SIM update data comprising repository SIM configuration data that is associated with the UE identifying information that is more recent than the UE SIM configuration data, wherein
sending the SIM status message to the entitlement server comprises sending the SIM update data to the entitlement server.

3. The method of claim 2, further comprising:
sending, by the SIM configuration repository, a SIM transfer message to a short message service center, SMSC, the SIM transfer message configured to cause the SMSC to send the SIM update data to the UE via an SMS message, wherein
sending the SIM status message to the entitlement server comprises sending information indicating that the SIM update data is being sent to the UE via the SMSC.

4. The method of claim 1, further comprising:
receiving, by the SIM configuration repository, a SIM update message comprising SIM update data and update UE identifying information identifying one or more UEs associated with the SIM update data; and
sending, by the SIM configuration repository, a SIM update status message to the entitlement server comprising the update UE identifying information and SIM configuration data associated with the UEs identified by the update UE identifying information.

5. A method of updating Subscriber Identity Module, SIM, data in a user equipment, UE, associated with a wireless communication service provider, the method comprising:
receiving, by an entitlement server executing on a network server of the wireless communication service provider, a UE SIM update inquiry from a UE associated with the wireless communication service provider, the UE SIM update inquiry comprising UE identifying information identifying the UE and information identifying UE SIM configuration data stored in the UE;
sending, by the entitlement server, a SIM update inquiry to a SIM configuration repository of the wireless communication service provider, the SIM update inquiry comprising the UE identifying information and the information identifying the UE SIM configuration data;
receiving, by the entitlement server, a SIM status message from the SIM configuration repository, the SIM status message indicating whether repository SIM configuration data stored in the SIM configuration repository is more recent than the UE SIM configuration data; and
sending, by the entitlement server, a UE SIM update response to the UE, the UE SIM update response comprising the SIM status message.

6. The method of claim 5, wherein:
the SIM status message further comprises SIM update data comprising repository SIM configuration data that is associated with the UE identifying information that is more recent than the UE SIM configuration data; and
the UE SIM update response further comprises the SIM update data.

7. The method of claim 6, wherein:
the SIM status message further comprises backup delivery information indicating that the SIM update data is being sent to the UE by the SIM configuration repository via a short message service center, SMSC; and
the UE SIM update response further comprises the backup delivery information and is configured to indicate to the UE that the SIM update data will be received via SMS.

8. The method of claim 5, further comprising:
receiving, by the entitlement server, a SIM update status message from the SIM configuration repository, the SIM update status message comprising (i) update UE identifying information identifying one or more update UEs and (ii) repository SIM configuration data that is associated with the update UEs;
storing by the entitlement server the repository SIM configuration data;
associating the repository SIM configuration data with the update UE identifying information; and
sending, by the entitlement server, a UE SIM update prompt to one or more of the update UEs, the UE SIM update prompt comprising prompt information configured to cause the update UEs to send the UE SIM update inquiry to the entitlement server.

9. The method of claim 8, further comprising:
determining, by the entitlement server, in response to receiving the UE SIM update inquiry, whether repository SIM configuration data that is associated with the UE identifying information is stored in the entitlement server and, if so, sending, by the entitlement server, such repository SIM configuration data to the UE.

10. The method of claim 8, further comprising:
receiving, by the entitlement server, from the UE a message other than the UE SIM update inquiry, the message comprising UE identifying information that identifies the UE; and
determining, by the entitlement server, in response to receiving the message, whether repository SIM configuration data that is associated with the UE identifying information is stored in the entitlement server and, if so, sending, by the entitlement server, a UE SIM update prompt to the UE, the UE SIM update prompt comprising prompt information configured to cause the UE to send the UE SIM update inquiry to the entitlement server.

11. The method of claim 8 or 10, wherein the prompt information includes inquiry timing information, specifying one or more times for the one or more update UEs to send the UE SIM update inquiry.

12. A method of updating Subscriber Identity Module, SIM, data in a user equipment, UE, associated with a wireless communication service provider, the method comprising:
sending, by the UE, a UE SIM update inquiry to an entitlement server of the wireless communication service provider, the UE SIM update inquiry comprising UE identifying information identifying the UE and information identifying UE SIM configuration data stored in the UE; and
receiving, by the UE, a UE SIM update response from the entitlement server, the UE SIM update response comprising update information indicating whether SIM configuration data more recent than the UE SIM configuration data is available.

13. The method of claim 12, wherein the UE SIM update response further comprises:
SIM update data comprising repository SIM configuration data associated with the UE identifying information that is more recent than the UE SIM configuration data; or
backup delivery information indicating that SIM update data is being sent to the UE via a short message service center, SMSC.

14. The method of claim 12, further comprising:
receiving, by the UE, a UE SIM update prompt from the entitlement server, the UE SIM update prompt comprising prompt information, wherein the prompt information includes inquiry timing information and the UE determines a time to send the UE SIM update inquiry to the entitlement server based on the inquiry timing information; and
in response to the prompt information, sending, by the UE, the UE SIM update inquiry to the entitlement server.

15. The method of any one of claims 1, 5 or 12, wherein the UE identifying information includes information identifying one or more of the UE, a manufacturer of the UE, a model of the UE, a service provider or MVNO associated with the UE, and a provider plan associated with the UE.
